# NEW EUROPEAN PATENT SPECIFICATION

(11) **EP 0 455 454 B2**
(45) Date of publication and mention of the opposition decision: **15.07.1998**
(45) Mention of the grant of the patent: 25.01.1995
(21) Application number: 91303864.2
(22) Date of filing: 29.04.1991
(51) Int. Cl.: B60C 9/22

(54) **Radial tyre**
Radialluftreifen
Pneu à carcasse radiale

(30) Priority: 02.05.1990 JP 116512/90
(43) Date of publication of application: 06.11.1991
(73) Proprietor: SUMITOMO RUBBER INDUSTRIES LIMITED, Kobe-shi Hyogo-ken (JP)
(72) Inventor: Iuchi, Munenori, Chuo-Ku, Kobe-shi, Hyogo-ken (JP)
(74) Representative: Stewart, Charles Geoffrey

(56) References cited:
- DE-A- 3 629 955
- GB-A- 1 581 571
- JP-A- 1 278 803
- JP-A- 6 160 303
- LU-A- 85 964
- US-A- 3 991 803
- US-A- 4 484 965
- US-A- 4 896 307
- Kleemann, "Mischungen für die Elastverarbeitung", 1st edition, pages 333 and 334.

## Description

The present invention relates to a belted radial ply tyre, which is improved in Radial Runout (RRO) and is able to improve productivity.

Often, a radial tyre is provided with a belt reinforcement comprising a breaker A and a band or bandage B, wherein the band cords are generally laid parallel to the circumferential direction of the tyre and contrarily, the breaker cords are inclined with respect to the circumferential direction.

Such belt reinforcements are shown in Figures 9-11. Figure 9 shows a full band B composed of a full width ply. Figure 10 shows an edge band B composed of a pair of edge pies. Figure 11 shows a combination band B composed of a full width ply b1 and a pair of edge plies b2.

The edge plies are effective in increasing the hoop force at the breaker edges, and accordingly effective in preventing ply edge looseness and separation.

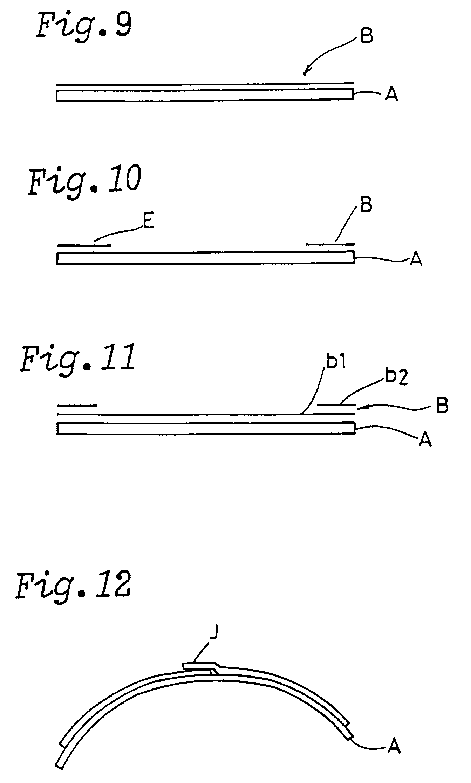

Usually, such a band ply is formed by winding a ply material having the same width as its finishing width, around the carcass, and the ends of the ply are overlapped each for a certain amount at a joint J shown in Figure 12. Accordingly, the thickness and rigidity are increased at the joint J, and the RRO (Radial Runout) of the tyre is increased, and further, the tyre uniformity is disturbed.

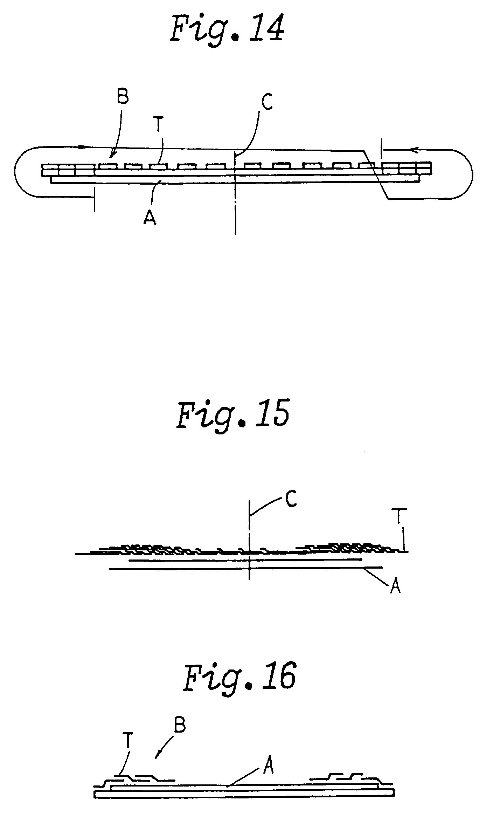

In order to overcome those problems a jointless band may be used, but as shown in Figure 16, to form an edge ply at each edge of a breaker, when a strip T is wound separately at each breaker edge, since the number of windings or turns in each ply is small and both ends of the strip are free, the wound strip is liable to be loosened and to move during the tyre vulcanising process due to the increased cord tension, and accordingly the finished ply has an uneven thickness distribution which increases RRO, and spoils tyre uniformity.

On the other hand, various types of jointless bands have been proposed.

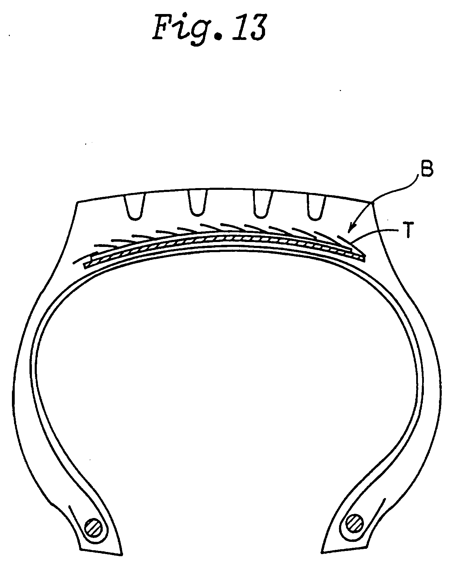

In order to form a band like the above-mentioned full width band B in Figure 9, Japanese Utility-Model Publication (JITSUYO-KOKAI) No 61-15604 discloses a band B shown in Figure 13, wherein a strip T is wound spirally at regular pitches from one edge to the other edge of a breaker, while slightly overlapping the adjacent edges thereof. Accordingly, the hoop effect is not enhanced at the breaker edge regions at which a strong hooping force is required.

In Japanese Patent Publication (KOKAI) No 62-203803, a band B having a double layered structure at the edge of a breaker A like the band B shown in Figure 11 is disclosed, wherein a strip T including reinforcing cords of 1 to 8 in number is wound, while traversing a breaker A as shown in Figure 14.

However, the traversing direction is changed at least twice as indicated by the arrows in Figure 14 to wind the strip around the previously wound portion thereof.

Therefore, it becomes hard to provide a band with the necessary dimensional and positional accuracies, and further productivity is lowered.

Further, the allowed Japanese Patent Publication (KOUKOKU) No 1-278803 (corresponding to EP-A-0 333 628) discloses a band B, also formed by winding a strip T around a breaker A, wherein the strip is overlapped as shown in Figure 15. In a central region, the overlap is 50% of the strip width and the overlap is increased to 75% in side regions. Accordingly, the band has a double layered structure even in the central region, which results in an excessive increase in the hooping force in the central region as well as a decrease in cornering power. Further the tyre weight increases.

A tyre having a band formed by winding a strip around a breaker to form a layer overlapped in the side parts is disclosed by Patent Publication DE-3629955.

It is therefore the object of the present invention to provide a radial tyre having a belt reinforcement comprising a breaker and a band having edge plies, in which the above-mentioned problems, especially problems of RRO and uniformity, are solved.

According to the present invention, a radial tyre comprises a carcass extending between bead portions through sidewall portions and a tread region comprising at least one ply of radially arranged cords turned up around bead cores, and a belt disposed radially outside the carcass and inside the tread and composed of a breaker and a band, said breaker comprising at least two plies of cords inclined with respect to the tyre equator so that the cords in each ply cross the cords in the next ply, and said band being disposed on the radially outer side of the breaker and comprising a strip of parallel organic fibre cords embedded in a topping rubber which strip is wound spirally and continuously around the breaker from its one edge to the other edge, the winding pitches of the strip in the side regions of the breaker being substantially a half of the strip width, and the pitches in the central region being not less than the strip width, wherein the width of the central region is 1/3 to 1/1.5 times the breaker width, characterised in that the winding pitches in the central region are such that spaces of 30 to 100mm are formed between the axially adjacent edges of the wound strip, the number of said organic fibre cords in the strip is in the range of 10 to 25, and the topping rubber of the strip is a rubber compound containing 30 to 95 parts by weight of natural rubber and 5 to 70 parts by weight of styrene-butadiene rubber.

Embodiments of the present invention will now be described in detail with reference to the accompanying drawings, in which:

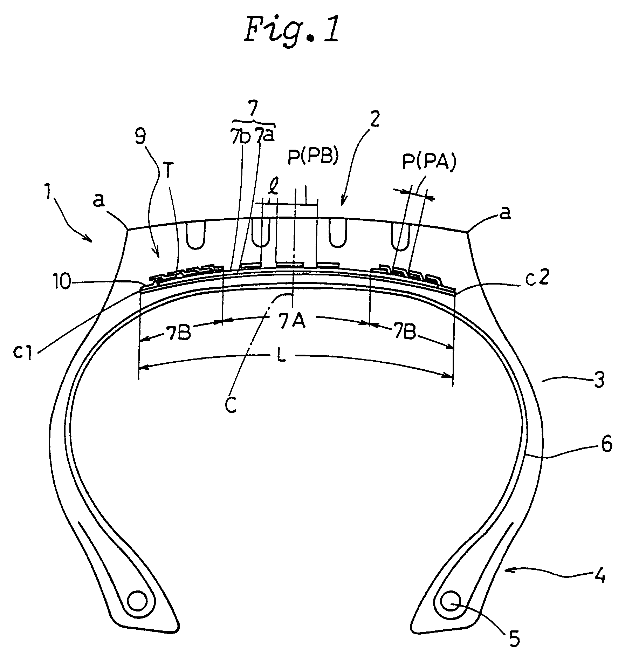

Figure 1 is a sectional view showing an embodiment of the present invention;

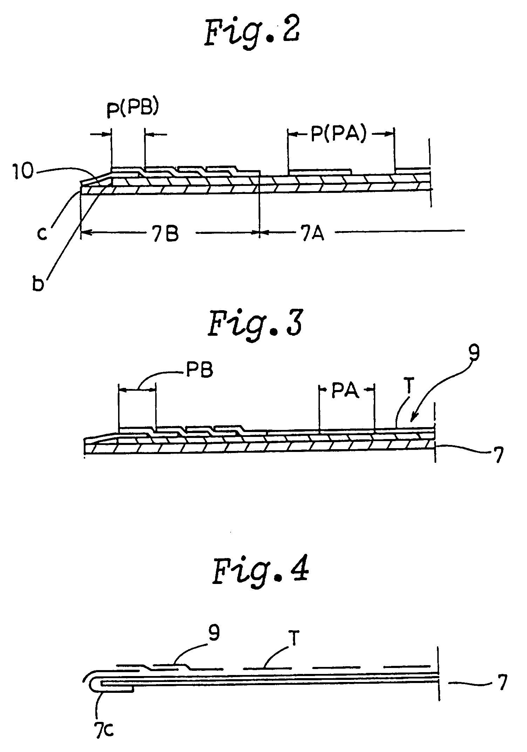

Figure 2 is a sectional view showing the band thereof;
Figures 3-5 are sectional views each showing another example of the band;

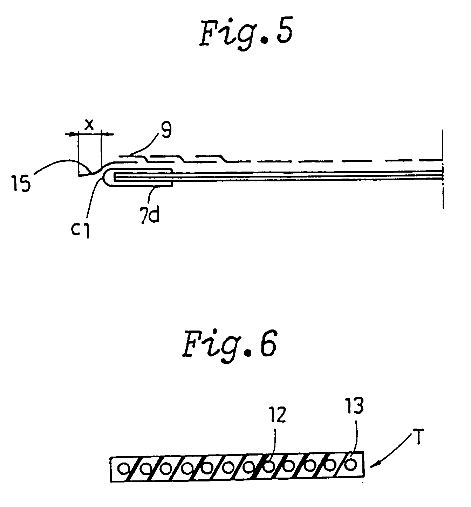

Figure 6 is a sectional view showing a band strip;

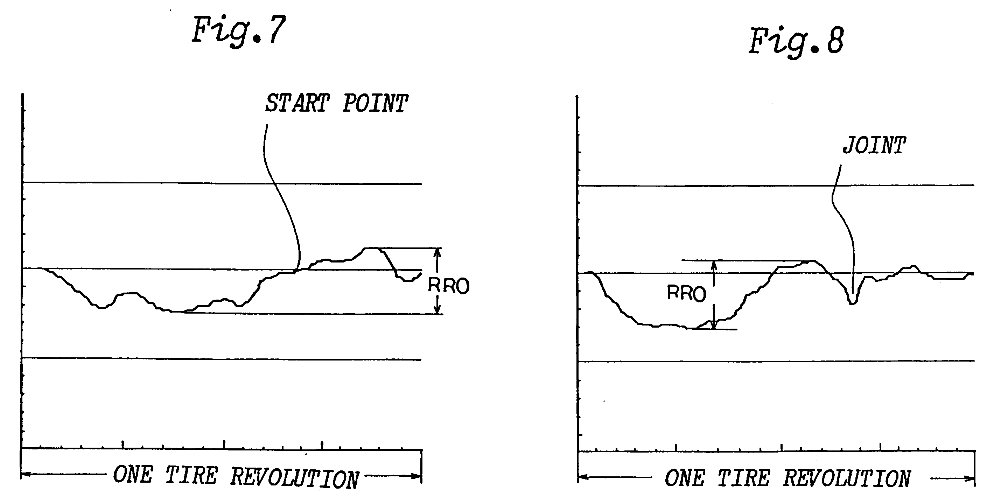

Figure 7 is a diagram showing RRO (Radial Runout) of a tyre according to the present invention;
Figure 8 is a diagram showing RRO (Radial Runout) of a conventional tyre;
Figures 9-11 are sectional views showing conventional band structures;
Figure 12 is a diagram showing a joint of the belt ply in the conventional tyre;
Figures 13-15 are sectional views showing a prior art tyre; and
Figure 16 is a sectional view for explaining a possible method of winding a strip.

In Figures 1 and 2, a radial tyre 1 comprises a pair of bead cores 5 disposed one in each bead portion 4 of the tyre, a carcass 6 extending between the bead portions 4 through a tread portion 2 and sidewall portions 3 of the tyre and turned up around the bead cores 5 from the inside to the outside of the tyre. The tread 2 is disposed radially outside the carcass, and a belt reinforcement is disposed between the carcass and the tread and comprises a breaker 7 disposed radially outside the carcass 6 and a band 9 disposed on the radially outer side of the breaker 7.

The carcass 6 is composed of at least one ply of cords arranged radially at 70 to 90 degrees with respect to the tyre equator.

For the carcass cords, inorganic fibre cords, e.g. steel or glass, or organic fibre cords, e.g. nylon, polyester, rayon, aromatic polyamide, or the like can be used. The breaker 7 in this embodiment comprises two plies 7a and 7b of parallel cords. The radially inner ply 7a has an axial width substantially equal to the tread width between the edges (a) of the tread 2. The radially outer ply 7b has a narrower width than the inner ply 7a. Therefore, the inner ply 7a is effectively provided with projecting portions 10 from the edges b of the outer ply 7b to the edges c1 and c2 of the breaker assembly.

The breaker plies 7a and 7b are made of high modulus cords, e.g. steel cords,, aromatic polyamide cords or the like, and the cords in each ply are arranged parallel to each other and inclined at acute angles with respect to the tyre equator C to cross the cords in the next ply, so as not to provide directional characteristics in the tyre from the breaker and to provide the necessary reinforcing effect and hoop effect of the breaker.

In the breaker, each ply 7a and 7b is formed by a conventional method, that is by winding around a carcass a ply material slip having the same width as the finished ply width.

On the contrary, the band 10 is formed by winding spirally and continuously a narrow band strip T around the breakers 7a,7b. The winding is from one edge to the other edge thereof as shown in the embodiment in the Figures from the left edge c1 to the right edge c2 of the inner wide ply 7a of the breaker 7.

As shown in Figure 6, the band strip T comprises reinforcing cords 12 which are laid parallel to each other, and a topping rubber 13 in which the reinforcing cords 12 are embedded. The cords are arranged in the widthwise direction of the strip in a line and spaced apart by a small distance.

The spiral winding pitch P of the band strip T is changed between a central region 7A and side regions 7B, wherein the central region 7A is centred on the tyre equator C and the width thereof is 1/3 to 1/1.5 times the full breaker width which is the axial width between the edges c1 and c2 of the inner wide ply 7a. In the central region 7A, the spiral pitches PB are such that the spaces 1 between the axially adjacent parts of the wound strip T are set in the range of 30 to 100mm.

In each of the side regions 7B, the spiral pitches PA are set at a substantially 1/2 width of the band strip width w, which pitches PA are smaller than the pitches PB in the central region, where "substantially 1/2 width" means W/2 plus or minus 50%. Accordingly an edge band like that shown in Figure 10 is formed.

In this example, the spiral pitches P are changed only in a transitional region which is formed between the central region 7A and each of the side regions 7B.

Preferably, the band 9 covers the whole width of the side regions 7B of the breaker 7. Accordingly, at the edges c1 and c1 of the breaker, the strip T is wound completely to the edges c1 and c2, that is the first turn and the last turn of the strip are made along the respective edges.

In the winding process, at the starting edge and stopping edge, the strip T can be protruded from the edges c1 and c2 by, for example, a half strip width or the pitch PA, and the protruding portions 15 (as shown in Figure 5) cut off, but they may be retained uncut.

The number of reinforcing cords in the strip T is in the range of 10 to 25, whereby the strip has a suitable width for the winding work which allows a smooth change in the winding pitches. If the number is less than 10, the width w of the strip T is too small, and the winding work efficiency is poor, and further the dimensional accuracy of the band is liable to be lost. If the number is more than 25, the width w is too large, and the strip is likely to be creased in the above-mentioned transitional regions, which results in poor working efficiency.

The width w of the strip T is in the range of 10 to 30mm, preferably 12 to 25mm.

Preferably the thickness t of the strip is set in the range of 0.5 to 1.0mm.

In order to reduce the difference in rigidity between the stiff breaker and the tread rubber, organic fibre cords having a tensile strength of not more than 100 kgf/sq.mm, for example nylon cords, polyester cords or the like, are used for the reinforcing cords 12.

Especially nylon-cords which have a heat shrinking characteristic are preferably used because the hoop force of the band to the breaker 7 is then increased in the tyre vulcanising process.

In this case, 66-nylon cords whose cord thickness, elongation specified by JIS-L1017, and elastic modulus are respectively 1000d/2 to 1500d/2, 8 to 10%, and 4 to 10 x 10⁴ kgf/sq.cm are preferably used.

Further, for the topping rubber of the strip, various rubber compounds may be used, but a compound containing 30 to 95 parts by weight of natural rubber (NR) and 5 to 70 parts by weight of styrene-butadiene rubber (SBR) is preferably used because such a compound has good strength and durability against repeated deformation, and the temperature rise due to the hysteresis loss in use of the tyre is well controlled. Two recipes for such topping rubber are given in Table 1.

**TABLE 1**

| | Ex. 1 | Ex. 2 |
|---|---|---|
| NR | 70 | 50 |
| SBR | 30 | 50 |
| Carbon black | 45(HAF) | 45(HAF) |
| Sulfur | 3.0 | 3.0 |
| Antioxidant | 1.0 | 1.0 |
| Accelerator | 1.1 | 1.1 |
| Stearic acid | 2.0 | 2.0 |
| Zinc oxide | 5.0 | 5.0 |

Figure 3 shows a modification of the band 9, in which the spiral pitches PA in the central region 7A are decreased to a value corresponding to the strip width w, while the pitches PB in the side regions 7B are kept unchanged at a half width w/2. In this case, therefore, a double layered structure is formed in the side regions 7B, and a single continuous layer structure is formed in the central regions 7A.

In Figures 1, 2 and 3, the bands 9 are combined with the breaker 7 composed of only the cut-end plies 7a and 7b of which edges are cut and left as they are. However, the band 9 can be combined with a breaker 7 including at least one folded ply 7c the edges of which are folded radially outwardly or radially inwardly as shown in Figure 4. Further, as shown in Figure 5, it can be combined with a breaker 7 having a pair of narrow edge plies 7d which cover the edges of full width plies.

The side edges of the band 9 can be aligned with the edges c1 and c2 of breaker 7, but they can be protruded from the edges c1 and c2 by a small width x so as to form protruding portions 15 as shown in Figure 5.

Figure 7 shows the RRO (Radial Runout) of a P215/60R15 passenger tyre according to the invention, having the belt structure shown in Figure 3. In this working example tyre, fifteen nylon cords were embedded in the topping rubber, the width of the strip was 15mm, and the width of the central region 7A was 1/2 of the breaker width L.

Figure 8 shows the RRO (Radial Runout) of a reference tyre having a conventional belt construction in which the band ply has an overlap joint at the circumferential ends as shown in Figure 12.

As explained above, in the present invention, the band is formed by winding a strip spirally and continuously from one edge to the other edge of the breaker. Therefore, the thickness variation of the band in the circumferential direction of the tyre is restricted only at the two small points of the starting end and the stopping end of the strip, and the uniformity of the tyre is improved and RRO is reduced.

Further, as the winding pitches are set at a half of the strip width in the side regions, the band is provided with a double-layered structure, but in the central region the winding pitches are smaller than those in the side regions. Therefore the hoop effect of the band is varied axially of the tyre to be larger in the side regions than the central region.

## Claims

1. A radial tyre (1) comprising a carcass (6) extending between bead portions (4) through sidewall portions (3) and a tread region (2) comprising at least one ply of radially arranged cords turned up around bead cores (5), and a belt disposed radially outside the carcass (6) and inside the tread and composed of a breaker (7) and a band (9), said breaker (7) comprising at least two plies of cords inclined with respect to the tyre equator so that the cords in each ply cross the cords in the next ply, and said band (9) being disposed on the radially outer side of the breaker (7a,7b) and comprising a strip (T) of parallel organic fibre cords (12) embedded in a topping rubber (13) which strip (T) is wound spirally and continuously around the breaker from its one edge to the other edge, the winding pitches (P) of the strip (T) in the side regions (7B) of the breaker being substantially a half of the strip width, and the pitches (P) in the central region (7A) being not less than the strip width, wherein the width of the central region (7A) is 1/3 to 1/1.5 times the breaker width, characterised in that the winding pitches (P) in the central region (7A) are such that spaces of 30 to 100mm are formed between the axially adjacent edges of the wound strip (T), the number of said organic fibre cords (12) in the strip (T) is in the range of 10 to 25, and the topping rubber of the strip (T) is a rubber compound containing 30 to 95 parts by weight of natural rubber and 5 to 70 parts by weight of styrene-butadiene rubber.

2. A radial tyre according to claim 1 characterised in that the band cords (12) are 66-nylon cords whose maximum cord thickness, elongation as specified in JIS-L1017, and elastic modulus are respectively 1500d/2, 8 to 10% and 4 to 10 X10⁴kgf/cm².

3. A radial tyre according to claims 2 characterised in that the band cords (12) have a thickness in the range 1000d/2 to 1500d/2.

4. A radial tyre according to any of claims 1 to 3 characterised in that the width of the strip (T) is in the range of 10 to 30mm.

5. A radial tyre according to any of claims 1 to 3 characterised in that the width of the strip (T) is in the range of 12 to 25mm.

6. A radial tyre according to any of claims 1 to 5 characterised in that the thickness of the strip (T) is in the range of 0.5 to 1.0mm.

## Patentansprüche

1. Radialreifen (1) mit einer Karkasse (6), die sich zwischen Wulstabschnitten (4) durch Seitenwandabschnitte (3) und einen Laufflächenbereich (2) erstreckt, mit wenigstens einer Lage radial angeordneter Korde, die um Wulstkerne (5) herum umgeschlagen sind, und einem Gürtel, der radial außerhalb der Karkasse (6) und innerhalb der Lauffläche angeordnet ist und aus einem Breaker (7) und einem Band (9) besteht, wobei der Breaker (7) wenigstens zwei Lagen von Korden umfaßt, die bezüglich des Reifenäquators geneigt sind, so daß die Korde in jeder Lage die Korde in der nächsten Lage kreuzen, und das Band (9) auf der radial äußeren Seite des Breakers (7a, 7b) angeordnet ist und einen Streifen (T) paralleler organischer Faserkorde (12) umfaßt, die in einem Obergummi (13) eingebettet sind, wobei der Streifen (T) spiralförmig und kontinuierlich um den Breaker herum von seiner einen Kante zur anderen Kante gewickelt ist, die Wicklungsabstände (P) des Streifens (T) in den Seitenbereichen (7B) des Breakers im wesentlichen die Hälfte der Streifenbreite betragen, und die Abstände (P) in dem zentralen Bereich (7A) nicht weniger als die Streifenbreite betragen, wobei die Breite des zentralen Bereichs (7A) 1/3 bis 1/1,5 der Breakerbreite beträgt,
**dadurch gekennzeichnet,**
daß die Wicklungsabstände (P) in dem zentralen Bereich (7A) derart sind, daß Räume von 30 bis 100 mm zwischen den axial benachbarten Kanten des gewickelten Streifens (7) ausgebildet sind, daß die Anzahl der organischen Faserkorde (12) in dem Streifen (T) in dem Bereich von 10 bis 25 liegt, und daß der Obergummi des Streifens (T) eine Gummizusammensetzung ist, die 30 bis 95 Gewichtsteile Naturkautschuk und 5 bis 70 Gewichtsteile Styrol-Butadien-Kautschuk enthält.

2. Radialreifen nach Anspruch 1,
dadurch gekennzeichnet,
daß die Bandkorde (12) 66-Nylon-Korde sind, deren maximale Korddicke, wie in JIS-L1017 spezifizierte Dehnung und Elastizitätsmodul jeweils 1500d/2, 8 bis 10 % und 4 bis 10 X 10⁴ kgf/cm² betragen.

3. Radialreifen nach Anspruch 2,
dadurch gekennzeichnet,
daß die Bandkorde (12) eine Dicke in dem Bereich 1000d/2 bis 1500d/2 aufweisen.

4. Radialreifen nach einem der Ansprüche 1 bis 3,
dadurch gekennzeichnet,
daß die Breite des Streifens (T) in dem Bereich von 10 bis 30 mm liegt.

5. Radialreifen nach einem der Ansprüche 1 bis 3,
dadurch gekennzeichnet,
daß die Breite des Streifens (T) in dem Bereich von 12 bis 25 mm liegt.

6. Radialreifen nach einem der Ansprüche 1 bis 5,
dadurch gekennzeichnet,
daß die Dicke des Streifens (T) in dem Bereich von 0,5 bis 1,0 mm liegt.

## Revendications

1. Pneumatique (1) à carcasse radiale, comprenant une carcasse (6) placée entre des parties (4) de talon et passant dans des parties (3) de paroi latérale et une région (2) de bande de roulement comprenant au moins une nappe de câblés disposée radialement et repliée autour de tringles (5), et une ceinture placée radialement à l'extérieur de la carcasse (6) et à l'intérieur de la bande de roulement et composée d'une nappe sommet (7) et d'une bande (9), la nappe sommet (7) comprenant au moins deux nappes de câblés inclinées par rapport à l'équateur du pneumatique si bien que les câblés de chacune des nappes recoupent les câblés de la nappe voisine, la bande (9) étant placée du côté radialement externe de la nappe sommet (7a, 7b) et comprenant un ruban (T) de câblés parallèles de fibres organiques (12) enrobés dans un caoutchouc d'enrobage (13), ce ruban (T) étant enroulé en spirale et de façon continue autour de la nappe sommet de son premier bord à son autre bord, les pas d'enroulement (P) du ruban (T) dans les régions latérales (7B) de la nappe sommet étant pratiquement égaux à la moitié de la largeur du ruban, et les pas (P) dans la région centrale (7A) n'étant pas inférieurs à la largeur du ruban, et la largeur de la région centrale (7A) est comprise entre 1/3 et 1/1,5 fois la largeur de la nappe sommet, caractérisé en ce que les pas d'enroulement (P) dans la région centrale (7A) sont tels que des espaces de 30 à 100 mm sont formés entre les bords axialement adjacents du ruban enroulé (T), le nombre de câblés de fibres organiques (12) dans le ruban (T) est compris entre 10 et 25, et le caoutchouc d'enrobage du ruban (T) est une composition de caoutchouc contenant 30 à 95 parties en poids de caoutchouc naturel et 5 à 70 parties en poids de caoutchouc de butadiène-styrène.

2. Pneumatique à carcasse radiale selon la revendication 1, caractérisé en ce que les câblés (12) de la bande sont des câblés de "Nylon-66" dont l'épaisseur maximale de câblés, l'allongement spécifié par la norme JIS-L1017 et le module élastique sont respectivement de 1 500 d/2, 8 à 10 %, et 4.10⁴ à 10.10⁴ kgf/cm².

3. Pneumatique à carcasse radiale selon la revendication 2, caractérisé en ce que les câblés (12) de la bande ont une épaisseur comprise entre 1 000 d/2 et 1 500 d/2.

4. Pneumatique à carcasse radiale selon l'une quelconque des revendications 1 à 3, caractérisé en ce que la largeur du ruban (T) est comprise entre 10 et 30 mm.

5. Pneumatique à carcasse radiale selon l'une quelconque des revendications 1 à 3, caractérisé en ce que la largeur du ruban (T) est comprise entre 12 et 25 mm.

6. Pneumatique à carcasse radiale selon l'une quelconque des revendications 1 à 5 , caractérisé en ce que l'épaisseur du ruban (T) est comprise entre 0,5 et 1,0 mm.
